# EUROPEAN PATENT APPLICATION

(11) **EP 3 798 666 A1**
(43) Date of publication of application: **31.03.2021**
(21) Application number: 19382835.7
(22) Date of filing: 27.09.2019
(51) Int. Cl.: G01S 7/40, G01S 13/95

(54) **PROW RADAR OBSTACLE SIMULATOR FOR TESTING ON AN AIRCRAFT AND A METHOD THEREOF**

(71) Applicant: Airbus Defence and Space, S.A.U., 28906 Getafe - Madrid (ES); TTI Norte, S.L., 39011 Santander (ES); Skylife Engineering, S.L., 41092 Sevilla (ES)
(72) Inventor: BAREA MESTRE, Antonio, E-28906 Getafe, Madrid (ES); BERDONCES MACHIO, Deborah, E-28906 Getafe, Madrid (ES); RAMÍREZ CANO, Francisco Javier, E-28906 Getafe, Madrid (ES); PARRILLA CASQUET, Luis Miguel, E-41092 Sevilla (ES); DOMÍNGUEZ CORDERO, Yaisel, E-41092 Sevilla (ES); MARANTE TORRES, Reinel, E-39011 Santander (ES); GAGO ALONSO, Óscar, E-39011 Santander (ES); BERNAL MÉNDEZ, Joaquín, E-41092 Sevilla (ES); FREIRE ROSALES, Manuel José, E-41012 Sevilla (ES)
(74) Representative: ABG Intellectual Property Law, S.L.

(57) **Abstract**

The present invention provides a prow radar obstacle simulator system for testing on an aircraft, the system comprising: a hood comprising a plurality of antennas configured to receive radio frequency (RF) signals from an aircraft radar, the hood being made of a RF absorbent material; a signal processing means for processing the radar RF signals received by the plurality of antennas, the signal processing means being in data communication with the plurality of antennas and comprising first converting means for converting radar RF signals to an intermediate frequency (IF) signal and vice versa; and a control unit in data communication with the signal processing means and configured to process the IF signals for generating an echo signal based on at least one predefined echo pattern; wherein at least one antenna of the plurality of antennas is also configured to emit the generated echo signal to the aircraft radar.

## Description

### TECHNICAL FIELD OF THE INVENTION

The present invention belongs to the field of radar testing and is of special application in the aeronautic industry. More specifically, the invention provides a prow radar obstacle simulator system for aircraft on-board radar ground testing. The invention also provides a method for testing an aircraft radar by said prow radar obstacle simulator.

### BACKGROUND OF THE INVENTION

Currently, the ground tests for the on-board weather radar of an aircraft are performed outside the final assembly line hangars for avoiding hazard operation due to the high energy radio frequency emitted by the aircraft radar. Carrying out this ground test outdoor is very common around aeronautical companies developing transport or civilian aircrafts.

To develop this testing on the aircraft radar outdoor has the drawbacks that when the radar is tested outside, the aircraft radar is pointing to any possible weather conditions in the environment. That is, depending on weather conditions there is no fix pattern to test the aircraft radar and to compare results with other radar installations. Therefore, some weather conditions cannot be correctly detected until the flight is performed and in some cases in flight such weather conditions are neither detected. This involves repairing the aircraft radar or its integration and repeating the test again in flight.

The aircraft radar (typically for weather but potentially including mapping, search, and other capacities) is installed on the aircraft nose, particularly behind the nose radome of the aircraft. Since the frequency of the aircraft radar is typically between 9.3-9.5 Gh_{z} including high power signals, currently system needs to be tested outside for safety reasons

### SUMMARY OF THE INVENTION

The present invention provides a solution for the aforementioned problems, by a prow radar obstacle simulator system according to claim 1 and a method for testing an aircraft radar according to claim 8. In dependent claims, preferred embodiments of the invention are defined.

In a first inventive aspect, the invention provides a prow radar obstacle simulator system for testing on an aircraft, the system comprising:
- a hood comprising a plurality of antennas configured to receive radar radio frequency (RF) signals from an aircraft radar, the hood being made of a RF absorbent material,
- a signal processing means for processing the radar RF signals received by the plurality of antennas, the signal processing means being in data communication with the plurality of antennas and comprising first converting means for converting radar RF signals to an intermediate frequency (IF) signal and vice versa, and
- a control unit in data communication with the signal processing means and configured to process the IF signals for generating an echo signal based on at least one predefined echo pattern,
wherein at least one antenna of the plurality of antennas is also configured to emit the generated echo signal to the aircraft radar.

The present system is intended for testing the operation of a radar installed on an aircraft, in order to ensure that the radar works correctly before the aircraft beginning to be operational. This system allows to simulate the presence of obstacles, such as weather conditions, objects and/or targets search and beacon conditions, and wind shear/turbulence conditions, to test if the aircraft radar detects such obstacles and with what precision they are detected.

The present invention provides a system for testing the prow radar of an aircraft inside the hangar instead of outdoors for enhancing the quality of the testing and assuring the safety conditions required to test the aircraft radar with regards to high radio frequency energy.

In a particular embodiment, the radar is a weather radar installed on the prow of an aircraft and the radar obstacle simulator system is configured to simulate at least one weather condition. The weather radar is used to detect atmospheric conditions that may be dangerous for the flight, like storms.

In another particular embodiment, the radar is a search radar intended for searching objects and/or targets and the radar obstacle simulator system is configured to simulate at least one object and/or target. The search radar is used to detect objects like marine targets, as a support to cartography tasks, or to detect marine oil-slicks, for example.

In another particular embodiment, the radar obstacle simulator system is configured to simulate a fixed transponder beacon in any of the radar operation range.

In a preferred embodiment the radar obstacle simulator system is configured to simulate a plurality of conditions, including weather conditions, obstacles, targets and/or transponder beacons.

The present system advantageously allows conducting the radar functional test indoor while the known systems need to perform the testing outside due to the high radio frequency energy that needs to be radiated away from personnel due to safety reasons.

Particularly, the present system comprises a hood wherein a plurality of antennas are installed inside for receiving radio frequency signals from an aircraft radar. This hood is made of a RF absorbent material in order to absorb said RF radiations and to ensure the safety of the operators without the need to carry out the testing outdoor.

The hood will be understood as an enclosure structure to accommodate part of the aircraft prow where the radar is located, in order to ensure that all the RF radiation emitted during the testing is completely absorbed by this hood.

In a particular embodiment, the hood is a modular hood that may comprise an additional module or structure for the aircraft which comprises the radome space. The radome is understood as a structural weatherproof enclosure that protects a radar antenna installed on the nose of an aircraft. Advantageously, the modular hood allows to adapt the present system to any aircraft configuration (with or without radome mounted).This additional module or structure allows to save the distance between the antennas provided in the hood and the aircraft radome, as well as to ensure the completely electromagnetic energy absorption.

All the antennas arranged in the hood are configured to receive radar RF signals from the aircraft radar. Further, at least one antenna of this plurality of antennas is also configured to emit a generated echo signal in the form of radar RF signal to the aircraft radar. In a particular embodiment, the hood comprises a first plurality of antennas for receiving and emitting radar RF signals from and to the aircraft radar, and a second plurality of antennas for receiving radar RF signals from the aircraft radar. The arrangement of the antennas within the hood as well as the number of antennas varies depending on the geometry of the aircraft nose and the location of the radar.

The positioning and adjusting of the present system in the nose of the aircraft does not need fixing means between the hood and the aircraft fuselage. It is enough to move the hood so that the interface of the hood presses against the aircraft fuselage. In this sense, the hood interface is preferably flexible in order to correct slight deviations and to adapt to the contour of the aircraft fuselage. Particularly, the interface of the hood-aircraft is configured to not generate or favor static currents that may cause damage to operators when the aircraft is both energized and de-energized, and with the present system energized or non-energized.

The present hood is a movable structure configured to be adjusted its position respect to the aircraft by the operator.

Advantageously, the testing can be performed within a hangar in the normal sequence of functional tests on the ground associated with the assembly and integration of aircraft systems.

The system further comprises signal processing means in data communication with the plurality of antennas for processing the radar RF signals received from each antenna. The signal processing means comprises first converting means for converting radar RF signals received by the plurality of antennas into IF signals to be processed by a control unit, filtering the radar RF signal and reducing its frequency to an intermediate frequency (preferably 2.1 GHz approx.). Further, the first converting means also converts the IF signals generated in the control unit into radar RF signals to be emitted by at least one antenna of the plurality of antennas. Particularly, the radar RF signal emitted by said antenna corresponds to the echo signal generated by the control unit once the signal has been converted at Radar band frequency.

The control unit is configured to generate an echo signal to be emitted by at least one antenna of the plurality of antennas. The generation of this echo signal is based on a predefined echo pattern. Advantageously, the present system is able to generate an echo signal to verify that the aircraft radar performance is 100% available once the radar is already installed on the aircraft. Furthermore, the control unit advantageously stores in a memory a series of predefined echo patterns that will be used for aircraft radar functional tests.

The present system has advantageously the ability to generate radiation patterns to verify the operation of the radar.

The present system only needs one operator to perform the function of positioning the present system, adjusting it and conduct its operation.

In a particular embodiment, the present system can be operated under the following conditions: simulate radar ranges of at least 0.5NM-320NM; working frequencies for the band between 9.1 GHz-9.5GHz; peak power of 38W-12kW.

In an embodiment the present system is configured to measure in real time the following magnitudes related to the electromagnetic field power generated by the aircraft radar: average power emitted and the instantaneous peak power.

Advantageously, the present system allows checking the aircraft radar at calibrated patterns simulating, for instance weather conditions, covering from sensitivity to saturation as soon as possible (indoor), so if any problem is detected, it can be repaired easily and at low cost because there is no need to remove the aircraft radome, or to repeat flights, etc. Moreover, with the present system the time of testing is highly reducedsince there is no need to take the aircraft outside. In a particular embodiment the radar tests have been reduced in a 95% (18 hours of workload reduced up to 30 minutes).

In a particular embodiment, the signal processing means further comprises second converting means for sensing the power of the radar RF signal received and for converting radar RF signals into analog voltage signals.

In a particular embodiment, the control unit is further configured to track the position of the antenna which receives the radar RF signal respect to the aircraft, wherein the tracking is based on the converted analog voltage signals and on at least a power threshold.

The second converting means converts the radar RF signals received by the antennas into analog voltage signals to be processed by the control unit. In a particular embodiment, the second converting means comprises at least a power sensor.

The power sensors provided in the signal processing means allow the control unit to track the aircraft radar position through the data measured by the power sensors. Further, the power sensors also provide the power peak rate to the control unit.

Particularly, the control unit exchanges voltage levels of the signal measured by the sensor in angular increments of the radar rotation. That is, the control units relate a voltage with a rotation of X degrees. By this way, the present system advantageously obtains the confirmation that the aircraft radar is rotating according to its design and synchronizes the rotation of the radar antenna with the emission of the echo signal by the antennas of the system.

Advantageously, the tracking of the positions of the antennas that receive the radar RF signal from the radar allows detecting and/or monitoring in real time the movement of the aircraft radar.

In a particular embodiment, the prow radar obstacle simulator system further comprises a human machine interface, HMI, in data communication with the control unit and configured to generate the predefined echo patterns and to monitor the testing.

Mainly, the HMI is connected to the control unit and is responsible to generate or program predefined echo patterns desired which are then stored in a memory of the control unit for the echo signal generation. Furthermore, the HMI monitors the results of the testing performed by the present system.

The echo patterns predefined on the HMI are then stored in a memory of the control unit for being used when each one is requested for on ground testing.

In a particular embodiment, the first converting means comprises:
- a first RF chain configured to filter the radar RF signal and to reduce its frequency to an IF, and
- a second RF chain configured to filter the IF signal and to increase its frequency to a radar RF.

Depending on whether the system needs to convert a radar RF signal into IF signal or an IF signal into radar RF signal, the present system will pass this signal through the first or second RF chains, respectively.

In a particular embodiment, the signal processing means further comprises:
- attenuation means for attenuating the radar RF signal received by the plurality of antennas prior to be converted by the converting means, and
- a filter for filtering the radar RF signal received by the plurality of antennas and prior to be converted by the converting means.

In a particular embodiment, the hood comprises 9 antennas arranged separated from one another. More particularly, the hood comprises a first plurality of antennas, preferably 3 central antennas, configured to receive and emit radar RF signals from and to the aircraft radar; and a second plurality of antennas, preferably 6 antennas, configured to receive radar RF signals from the aircraft radar.

The power transmitted from the aircraft radar is captured from the plurality of antennas located in the hood. The radar movement, particularly the movement of the radar antenna, can be checked analyzing the input difference power from those antenna receivers. This allows the present system to check the radar pitch and roll positions.

In a second inventive aspect, the invention provides a method for testing an aircraft radar by a prow radar obstacle simulator system according to first inventive aspect, the method comprising the following steps:
a) detecting by at least one antenna of the plurality of antennas at least one radar RF signal emitted by the aircraft radar,
b) converting the radar RF signal received by the plurality of antennas to an IF signal by the first converting means,
c) processing by a control unit the IF signal for generating an echo signal,
d) generating an echo signal in the form of an IF signal according to at least one predefined echo pattern and the processed IF signal,
e) emitting the generated echo signal by at least one antenna of the plurality of antennas, and
f) testing the signal detected by the aircraft radar in response to the echo signal emitted in the step e).

The present method advantageously can be performed indoor, for instance, inside a hangar in the sequence of functional tests on the ground associated with the assembly and integration of aircraft systems. This method provides the generation of radiations patterns in the form of echo signals to verify the operation of the aircraft radar at calibrated patterns simulating particular obstacle, target and/or weather conditions.

Furthermore, this method advantageously does not require more than the control of an operator to carry out the testing with the present system.

In a particular embodiment, the present method allows the testing of weather radars, search radars and beacon radars, or any radar which has these capabilities integrated through different modes.

The radiation emitted by the aircraft radar in the form of radar RF signals is received by the plurality of antennas provided in the hood of the present system. These radar RF signals received by the plurality of antennas is then converted to IF signals by the first converting means for being then processed by the control unit to generate echo signals. Each echo signal is generated in the form of IF signal based on predefined echo patterns stored in the control unit and based on the IF signal received in the control unit. Then such IF signal is transformed into RF radar signal. Once the echo signal is generated, then it is emitted by one antenna of the plurality of antennas for testing the signal detected by the aircraft radar in response to the echo signal emitted.

The present system is configured to generate echo signal with particular sizes and intensities from an echo pattern which is in turn also configurable in terms of size and intensity. In a particular embodiment, the intensity of each weather echo signal and/or pattern is displayed in a range of colors (e.g. red, yellow, green) in accordance to aircraft on-board weather radar display designs.

In a particular embodiment, the present method advantageously is able to generate variable frequency patterns interpreted by the aircraft radar as turbulence phenomena and windshear, wherein the radar is a weather radar. In this sense, a variable frequency pattern in RF terms corresponds to variable speed field of the water particles contained, for instance, in a storm.

In a particular embodiment, the method further comprises:
- sensing the power of the radar RF signal received and converting the radar RF signal received by the plurality of antennas to an analog voltage signal by the second converting means,
- processing by the control unit the sensed analog voltage signal for tracking the position of the antenna which receives the radar RF signal with respect to the aircraft,
wherein the tracking is based on the power sensed for the radar RF signal (converted into analog voltage) and on at least a power threshold.

Optionally, the present method further advantageously allows tracking the position of the antenna which receives the radar RF signal coming from the aircraft radar, for deciding later which antenna is interesting to emit the echo signal generated by the control unit. Once the radar RF signals are received by the antennas, the power of these signals is sensed and each signal is converted to analog voltage signal by the second converting means for being then processed by the control unit for the tracking. Particularly, the tracking is based on the analog voltage signals and on a power threshold.

In a particular embodiment, the predefined echo pattern is generated by a human machine interface (HMI) in data communication with the control unit.

By means of the HMI the echo patterns desired are generated to supply the control unit with them for the generation of echo patterns in the testing. These echo patterns are stored in a memory of the control unit.

In a particular embodiment, the method further comprises monitoring the testing by a HMI in data communication with the control unit, wherein the HMI is also configured to communicate with the aircraft.

Furthermore, the HMI advantageously allows the operator to monitor the development of the testing performed by the present system, as well as the measurements detected by the aircraft radar, which are also shown in the aircraft, particularly on an aircraft display.

In a particular embodiment, the testing of step f) comprises comparing the echo signal detected by the aircraft radar to the echo signal generated on the control unit, preferably, said comparison being carried out on an aircraft display.

By this comparison between the echo signal measured by the aircraft radar and the echo signal generated by the control unit it is checked if the aircraft radar works as desired.

In a particular embodiment, in the step c) the IF signal is processed for determining the time when the pulse of the radar RF signal is received by the antenna.

In a particular embodiment, the step d) comprises:
- delaying the signal of the echo pattern relative to the radar RF signal detected, based on at least one predefined echo pattern,
- modeling the echo signal based on the power of the radar RF signal detected and on at least one predefined echo pattern.

In a particular embodiment, the method further comprises displaying on an aircraft display the echo signal generated and supplied to the radar This displaying allows to visualize the results of the test from the cockpit of the aircraft. Particularly, it may be visualized by an operator the data processed by the simulator system, the checking between the echo pattern and the echo signal generated for the aircraft radar.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic view of a prow radar obstacle simulator system according to an embodiment of the present invention.
- Figure 2: This figure shows a side view of a prow radar obstacle simulator system testing on an aircraft according to an embodiment of the present invention.
- Figure 3: This figure shows a front view of a plurality of antennas comprised in a hood of a prow radar obstacle simulator system according to an embodiment of the present invention.
- Figures 4A-4C: These figures show side view of a hood coupled to an aircraft according to embodiments of the present invention respectively.
- Figure 5: This figure shows a schematic graphic from an HMI according to an embodiment of the present invention.
- Figure 6: This figure shows a schematic graphic from an aircraft display according to an embodiment of the present invention.

### DETAILED DESCRIPTION OF THE INVENTION

### Prow radar obstacle simulator system (1)

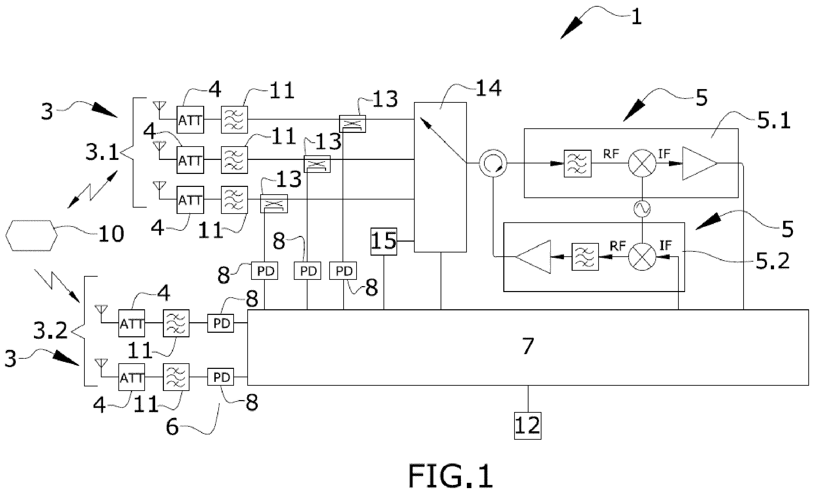

Figure 1 shows a schematic view of a prow radar obstacle simulator system (1) for testing on an aircraft radar (10). The system (1) comprises a hood (not shown) comprising a plurality of antennas (3) that interacts with the aircraft radar (10) to test its operation.

The system (1) further comprises a signal processing means that processes the radar RF signals received by the plurality of antennas (3), the signal processing means being in data communication with the plurality of antennas (3) and with a control unit (7). The control unit (7) is configured to process the signals received by the plurality of antennas (3) for generating an echo signal according to at least one predefined echo pattern. In an embodiment this predefined eco pattern is generated by an HMI (12) that is in data communication with the control unit (7).

The plurality of antennas (3) comprises a first plurality of antennas (3.1) for receiving radar RF signals from the radar (10) and also for emitting echo signals in the form of radar RF signals to the radar (10); and a second plurality of antennas (3.2) for receiving radar RF signals from the aircraft radar (10).

The signal processing means comprises attenuation means (4) and filters (11), the attenuation means (4) attenuates the radar RF signals received by the plurality of antennas (3: 3.1, 3.2) and then the signals are filtered by the filters (11). The attenuation and filtering of said radar RF signals received by the antennas (3) are performed prior to the conversion of said signals into IF signals or analog voltage signals. After attenuating and filtering said radar RF signal received by the first plurality of antennas (3.1), the signal is sampled by a power coupler (13) comprised also in the system (1).

The system (1) comprises first converting means (5) comprising a first RF chain (5.1) for filtering the radar RF signal coming from the power coupler (13) and reducing its frequency to IF so that the radar RF signal is converted to IF signal. The first converting means (5) also comprises a second RF chain (5.2) for filtering the IF signal coming from a control unit (7) and increasing its frequency to radar RF frequency so that the IF signal generated by the control unit (7) is converted to radar RF signal for being emitted to the aircraft radar (10).

On the other hand, the signal processing means further comprises second converting means (6) comprising a plurality of power sensors (8) that senses the power of the radar RF signal received by the first (3.1) and second (3.2) plurality of antennas and converts said radar RF signal into an analog voltage signal for being processed by the control unit (7). That is, the control unit (7) is able to track the position of the antennas (3.1, 3.2) that receives the radar RF signal from the aircraft radar (10). The control unit (7) bases the tracking on the converted analog voltage signal and on predefined power threshold. Particularly, each power sensor (8) is in data communication with the control unit (7) for transmitting the power values of each signal as well as the converted analog voltage signal.

The power couplers (13) are also connected to the power sensors (8) of the second converting means (6) for sensing the power of the radar RF signals received by the first plurality of antennas (3.1).

The system (1) further comprises switching means (14) for switching the communication between the power couplers (13) and the first converting means (5).

In this figure 1, the system (1) further comprises a built-in test equipment, BITE (15) for controlling the operational state of the present system (1). This BITE is configured for the system (1) to test itself. Advantageously, the built-in test equipment (15) allows the system (1) to know in real time the operational state of this system (1), particularly, the BITE detects the faults detected in the antennas (3).

The present system (1) comprises two detection paths, a first detection path associated to the radar RF signal emitted by the aircraft radar (10) which in turn is the origin of the return of the echo signal, and a second path associated to the radar RF signal useful to detect the movement of the aircraft radar by means of the tracking position of the antennas (3).

In another particular example, the plurality of antennas (3) are power sensors.

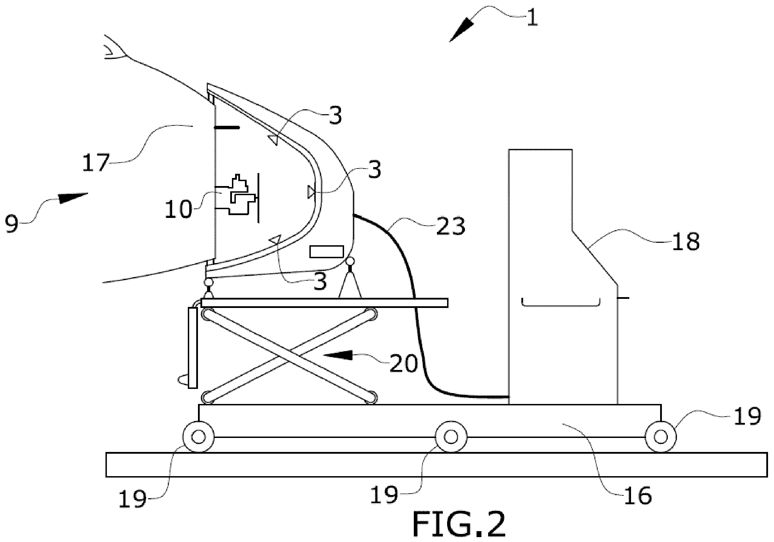

Figure 2 shows a side view of a prow radar obstacle simulator system (1) coupled to an aircraft (9) for testing the aircraft radar (10). Particularly, the aircraft radar (10) is located on the nose of the aircraft (9). The system (1) comprises a modular hood (2) comprising a plurality of antennas (3) arranged inside this hood (2). The system (1) is arranged on a platform structure (16) configured to couple the hood (2) to the aircraft fuselage (17) in such a way that the hood (2) absorbs electromagnetic radiations between the radar (10) and the antennas (3) preventing then the radiations from reaching the outside.

The platform structure (16) comprises a module (18) wherein the signal processing means, the control unit and the HMI are located. The hood (2) is located on a movable structure (20) which fixes the hood (2) in the correct position related to the aircraft fuselage (17). The platform structure (16) comprises means of displacement (19) to move the system (1) to an aircraft (9) for performing the testing.

The hood (2) is in data communication with the components of the system (1) provided on the module (18) by a wire connection (23).

In a particular example, the hood (2) is designed with at least two doors to enable fit the hood (2) to the aircraft fuselage (17).

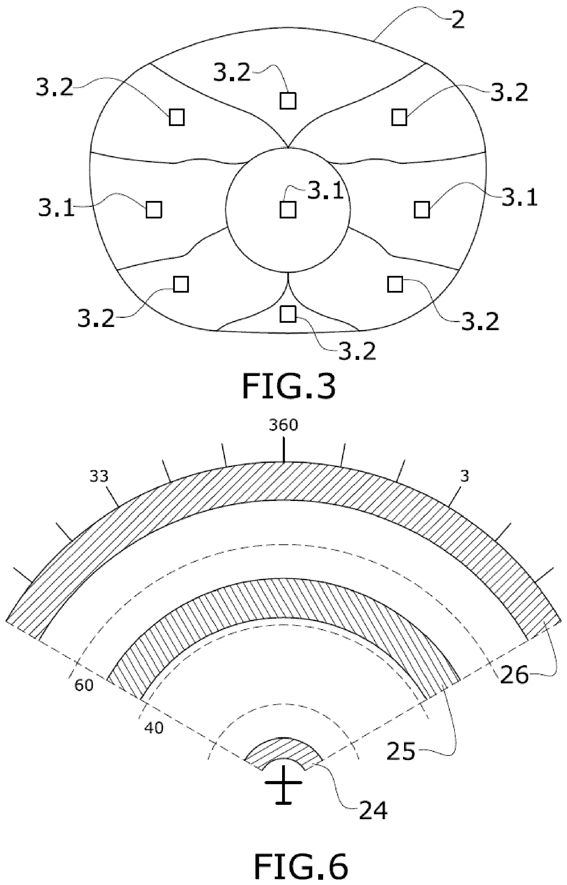

Figure 3 shows an example of the arrangement of the plurality of antennas (3) within the hood (2). Particularly, there is a first plurality of antennas (3.1) located in a central portion of the hood (2) while a second plurality of antennas (3.2) is located in an upper and lower portion of the hood (2). That is, the second plurality of antennas (3.2) is located substantially surrounding the first plurality of antennas (3.1).

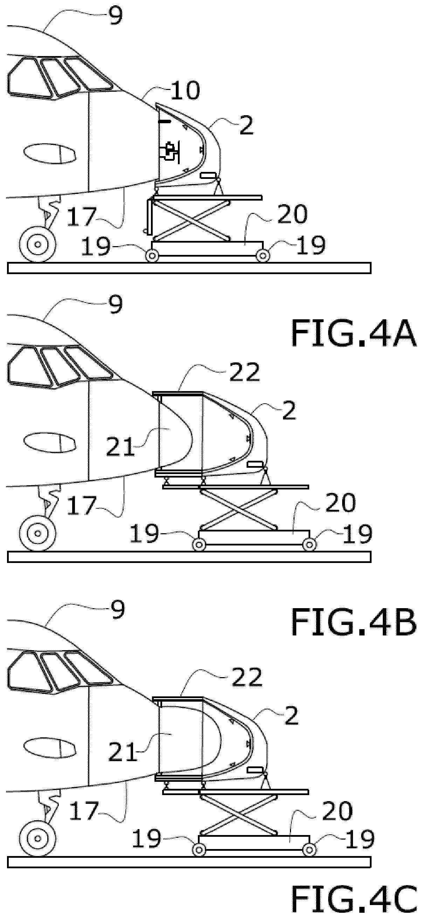

Figures 4A-4C show a modular hood (2) of a prow radar obstacle simulator system (1) coupled to the fuselage (17) of an aircraft (9) for testing the operation of an aircraft radar (10). The hood (2) is located on a movable structure (20) as it is defined on figure 2. Figure 4A shows an aircraft (9) with a radar (10) uncovered, that is, without a radome. In this figure, the hood (2) enclosures the radar (10) for the testing. Figures 4B-4C show an aircraft (9) with a different type of radome (21) respectively, which enclosure the radar. In these figures, the hood (2) further comprises a hood module (22) for adapting the hood (2) to the radome (21) so that this radome (21) is housed in the enclosure that forms the hood (2) and its module (22) for the testing.

### Method for testing an aircraft radar (10)

The present invention provides a method for testing an aircraft radar (10) by a prow radar obstacle simulator system (1) according to the system shown in figure 1, the method comprising the following steps:
a) detecting by at least one antenna of the plurality of antennas (3) at least one radar RF signal emitted by the aircraft radar (10),
b) converting the radar RF signal received by the plurality of antennas to an IF signal by the first converting means (5),
c) processing by a control unit (7) the IF signal for generating an echo signal,
d) generating an echo signal in the form of an IF signal according to at least one predefined echo pattern and the processed IF signal,
e) emitting the generated echo signal by at least one antenna (3.1) of the plurality of antennas, and
f) testing the signal detected by the aircraft radar (10) in response to the echo signal emitted in the step e).

In this example the method is intended for testing a weather radar (10). Particularly, the system (1) provides the generation of radiations patterns in the form of weather patterns to verify the operation of the aircraft radar (10).

Before step a), the present method comprises positioning the platform structure (16) closer to the aircraft nose and coupling the hood (2) to the aircraft fuselage (17) housing the aircraft radar (10) as it is shown on figure 2.

In step a), the detection of radar RF signals coming from the aircraft radar (10) is performed by a first (3.1) and second (3.2) plurality of antennas.

The step b) comprises reducing the frequency of the radar RF signals received to IF frequency so that the working frequencies of these signals are processed by the control unit (7). Further, in step b), the radar RF signals converted are the signals received by the first plurality of antennas (3.1).

Furthermore, the method comprises sensing by power sensors (8) the power of the radar RF signals received by the first (3.1) and second (3.2) plurality of antennas and converting by the power sensors (8) said radar RF signals to analog voltage signals by the second converting means (6) of the system (1). The power values of the sensed radar RF signal measured and the converted analog voltage signal are transmitted to the control unit (7) for tracking the position of the antennas (3) which receive the radar RF signal coming from the aircraft radar with respect to the aircraft (9). The tracking also considers a predefined power threshold.

For generating the echo signal, the control unit (7) is based on echo patterns predefined in an HMI (12) which is in data communication with the control unit (7). Therefore, the HMI (12) generates weather echo patterns and the control unit stores such weather echo patterns. More particularly, the HMI (12) selects the working mode of the present system (1), visualizes the power values of the power sensors (8) and generates and launches echo signals.

Particularly, in the step c), the method comprises determining the time when the pulse of the radar RF signal is received by the antenna of the first plurality of antennas (3.1). In the step d), the control unit (7) generates the echo signal according to the time determined, that is, delaying the signal of the echo pattern relative to the radar RF signal detected according to predefined echo patterns. Further, step d) comprises modeling the echo signal according to the power of the radar RF signal detected and on the predefined echo patterns. The time delays simulates different distances, for instance, simulates clouds in nautical miles corresponding to those delayed times. Furthermore, the echo signals comprise greater or lesser signal amplitude to simulate more or less reflective clouds (greater or lesser intensity) respectively.

Step f) of testing comprises comparing the echo signal detected by the aircraft radar (10) to the echo signal generated on the control unit (7). In a particular example, the comparing is carried out on the aircraft display.

The present method further comprises monitoring the development of the testing by the HMI (12).

In a particular example, the power of the echo signal generated in the present system (1) is represented by colors both on the HMI (12) and on aircraft displays. In this sense, the colors, e.g., red, yellow, green, of an echo signal correspond to different powers of RF according to the radar architecture. That is, when an echo signal is simulated according to a particular color and its size in miles, the echo signal is transformed into radar RF signals which power is increased or decreased to simulate the size of the signal pulse, being the size of the pulse the echo's size. It is understood that the aircraft radar (10) only measures an echo signal that is comprised in the working frequency of the radar (10).

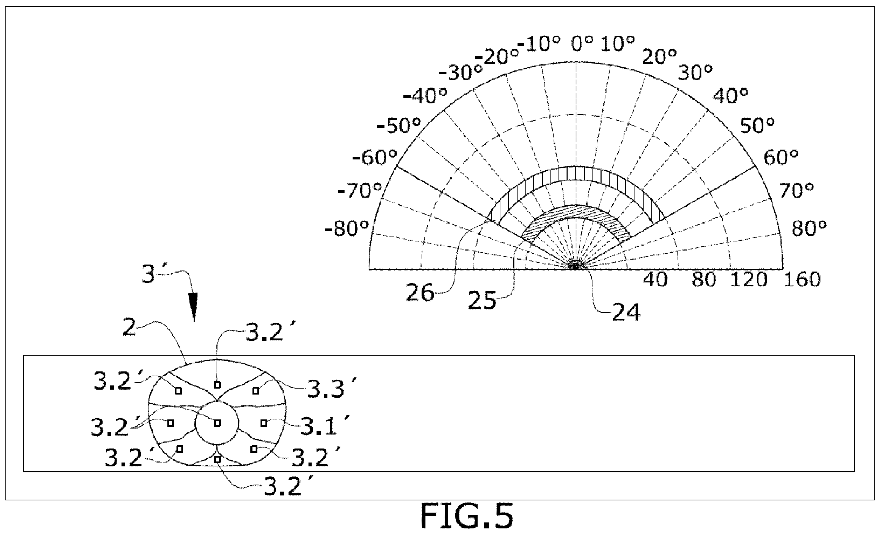

When the echo signal generated is emitted to the radar (10), the echo signal generated on the control unit (7) is compared with the results shown on the aircraft displays. That is, the method checks if the colors and the distance shown as results on the aircraft displays correspond to the echo signal generated on the HMI (12); if so, the radar (10) would be working properly. Particularly, figure 5 shows a graphic of a weather pattern echo to be simulated that is generated on the HMI (12). According to this simulated weather patterns echo, figure 6 shows a graphic from an aircraft display about the results of the echo signal received on the radar (10) from the system (1). As it can be observed, on both graphics shown on figures 5-6 there are represented three pulses, that is, a first pulse (24) closer to the aircraft nose, a second pulse (25) between 40 and 60 miles, and a third pulse (26) closer to 100 miles. These pulses may be represented in different colors.

Figure 5 further shows a graphic representation on the HMI of an arrangement of the plurality of antennas (3') within the hood (2). Particularly, it is shown nine antennas (3'), a first antenna (3.1') and a plurality of second antennas (3.2', 3.3'). When the power sensor (8) associated to each antenna (3') is operative (works properly), the antenna (3.2') may be represented on the HMI in a first color (e.g. color yellow) (not shown). The antenna (3.1') may be represented in a second color (e.g. color red) (not shown) to mean that the power sensor (8) is failing or is off. In addition, the antenna (3.3') may be represented in a third color (e.g. green color) (not shown) to mean that the aircraft radar passes in front of this antenna (3.3') and thus the power sensor (8) receives a radar RF signal with an intensity higher than a threshold. In this sense, observing the color change on the antennas (3') represented on the HMI, (e.g. from yellow color to green color), allows tracking the movement that follows the radar antenna.

Furthermore, the HMI also may provide a table of data (not shown) that shows the actual power received on each antenna (3) according to the graphic representations shown in figure 5.

According to an embodiment of the present method, the operator only needs to select the echo patterns to launch on the system (1) through the HMI (12) (as shown on figure 5), and to check how the echo signal generated on the control unit (7) is visualized on the aircraft navigation display (as shown on figure 6). In other embodiments the election of the echo patterns and/or the checking of the echo signal is performed automatically according to predefined settings.

Therefore, the present system (1) is configured to generate configurable echo patterns so that they can display any size on the cockpit display and any intensity (e.g. in different colors).

The HMI (12) is understood as a visual interface that is able to show one or several of the following magnitudes measured or calculated by the present system (1): power measured by each antenna, pulse width and period PRI (pulse repetition interval), the tilt of the antenna, the rotation of the antenna, size of the echo signals, and the intensity of each echo signals. The HMI (12) is the means through which the echo patterns are prepared and stored so they can be used later.

In an embodiment the method further comprises calculating the Minimum Discernible Signal, MDS, of the aircraft radar (10), by the following steps:
- generating an echo signal of low intensity,
- confirming if on the cockpit display said echo signal is represented,
- if the echo signal is not represented on the display, the intensity of the echo signal is gradually increased until it is confirmed that said echo signal is represented on the display.

The representation of said echo signal corresponds to the echo signal emitted by the present system (1) and received by the radar (10) as already mentioned.

According to a weather radar (10), under a qualitative perspective, the MDS is understood as a very thin and soft rain very far from the aircraft (9) position. That is, it is the minimum quantity of rain that can be detected at the maximum range of the radar.

## Claims

1. Prow radar obstacle simulator system (1) for testing on an aircraft (9), the system (1) comprising:
- a hood (2) comprising a plurality of antennas (3) configured to receive radar radio frequency (RF) signals from an aircraft radar (10), the hood (2) being made of a RF absorbent material,
- a signal processing means for processing the radar RF signals received by the plurality of antennas (3), the signal processing means being in data communication with the plurality of antennas (3) and comprising first converting means (5) for converting radar RF signals to an intermediate frequency (IF) signal and vice versa; and
- a control unit (7) in data communication with the signal processing means and configured to process the IF signals for generating an echo signal based on at least one predefined echo pattern,
wherein at least one antenna (3.1) of the plurality of antennas is also configured to emit the generated echo signal to the aircraft radar (10).

2. Prow radar obstacle simulator system (1) according to claim 1, wherein the signal processing means further comprises second converting means (6) for sensing the power of the radar RF signal received and for converting radar RF signal into analog voltage signals.

3. Prow radar obstacle simulator system (1) according to claim 2, wherein the control unit (7) is further configured to track the position of the antenna (3) which receives the radar RF signal respect to the aircraft (9), wherein the tracking is based on the converted analog voltage signals and on at least a power threshold.

4. Prow radar obstacle simulator system (1) according to any of previous claims further comprising a human machine interface (12) in data communication with the control unit (7) and configured to generate the predefined echo patterns and to monitor the testing.

5. Prow radar obstacle simulator system (1) according to any of the previous claims, wherein the first converting means (5) comprises:
- a first RF chain (5.1) configured to filter the radar RF signal and to reduce its frequency to an IF, and
- a second RF chain (5.2) configured to filter the IF signal and to increase its frequency to a RF.

6. Prow radar obstacle simulator system (1) according to any of the previous claims, wherein the signal processing means further comprises:
- attenuation means (4) for attenuating the radar RF signal received by the plurality of antennas (3) prior to be converted by the converting means (5, 6), and
- a filter (11) for filtering the radar RF signal received by the plurality of antennas (3) and prior to be converted by the converting means (5, 6).

7. Prow radar obstacle simulator system (1) according to any of the previous claims, wherein the hood comprises 9 antennas (3) arranged separated from one another.

8. Method for testing an aircraft radar (10) by a prow radar obstacle simulator system (1) according to any of the previous claims, the method comprising the following steps:
a) detecting by at least one antenna of the plurality of antennas (3) at least one radar RF signal emitted by the aircraft radar (10),
b) converting the radar RF signal received by the plurality of antennas to an IF signal by the first converting means (5),
c) processing by a control unit (7) the IF signal for generating an echo signal,
d) generating an echo signal in the form of an IF signal according to at least one predefined echo pattern and the processed IF signal,
e) emitting the generated echo signal by at least one antenna (3.1) of the plurality of antennas, and
f) testing the signal detected by the aircraft radar (10) in response to the echo signal emitted in the step e).

9. Method according to claim 8, further comprising
- sensing the power of the radar RF signal received and converting the radar RF signal received by the plurality of antennas (3) to an analog voltage signal by the second converting means (6),
- processing by the control unit (7) the sensed analog voltage signal for tracking the position of the antenna which receives the radar RF signal with respect to the aircraft (9),
wherein the tracking is based on the power sensed for the radar RF signal and on at least a power threshold.

10. Method according to any of claims 8 to 9, wherein the predefined echo pattern is generated by a human machine interface (12) in data communication with the control unit (7).

11. Method according to any of claims 8 to 10 further comprising monitoring the testing by a human machine interface (12) in data communication with the control unit (7), wherein the human machine interface (12) is also configured to communicate with the aircraft (9).

12. Method according to any of claims 8 to 11, wherein the testing of step f) comprises comparing the echo signal detected by the aircraft radar (10) to the echo signal generated on the control unit (7), preferably said comparison being carried out on an aircraft display.

13. Method according to any of claims 8 to 12, wherein in the step c) the IF signal is processed for determining the time when the pulse of the radar RF signal is received by the antenna (3).

14. Method according to any of claims 8-13, wherein the step d) comprises:
- delaying the signal of the echo pattern relative to the radar RF signal detected, based on at least one predefined echo pattern,
- modeling the echo signal based on the power of the radar RF signal detected and on at least one predefined echo pattern.

15. Method according to any of claims 8 to 14, further comprising displaying on an aircraft display the testing.
